# EUROPEAN PATENT SPECIFICATION

(11) **EP 2 851 986 B1**
(45) Date of publication and mention of the grant of the patent: **08.08.2018**
(21) Application number: 13791003.0
(22) Date of filing: 27.02.2013
(51) Int. Cl.: H01M 8/02

(54) **FUEL CELL AND METHOD FOR PRODUCING SAME**
BRENNSTOFFZELLE UND HERSTELLUNGSVERFAHREN DAFÜR
PILE À COMBUSTIBLE ET PROCÉDÉ DE PRODUCTION DE CETTE DERNIÈRE

(30) Priority: 17.05.2012 JP 2012113661
(43) Date of publication of application: 25.03.2015
(73) Proprietor: Panasonic Intellectual Property Management Co., Ltd., Osaka-shi, Osaka 540-6207 (JP)
(72) Inventor: YAMAUCHI, Masaki, Osaka 540-6207 (JP); SUGAWARA, Yasushi, Osaka 540 - 6207 (JP); TAKEGUCHI, Shinsuke, Osaka 540-627 (JP); TSUJI, Yoichiro, Osaka 540-6207 (JP)
(74) Representative: Grünecker Patent- und Rechtsanwälte PartG mbB
(86) International application number: PCT/JP2013/001141
(87) International publication number: WO 2013/171939

(56) References cited:
- WO-A1-02/01658
- WO-A1-2008/129840
- WO-A1-2009/072291
- WO-A1-2010/100906
- WO-A1-2011/019093
- JP-A- 2007 048 472
- JP-A- 2008 146 932
- JP-A- 2008 305 674
- JP-A- 2009 181 951
- JP-A- 2009 252 627

## Description

### TECHNICAL FIELD

The present invention relates to a fuel cell used as a drive source for, e.g., a mobile object such as an automobile, a dispersed power generation system, a domestic cogeneration system, or the like.

### BACKGROUND ART

A fuel cell (e.g., a polymer electrolyte fuel cell) is a device that causes a fuel gas containing hydrogen and an oxidant gas containing oxygen such as air to electrochemically react with each other, to simultaneously produce electric power and heat.

Conventionally, as this type of fuel cell, there have been known fuel cells described, for example, in Patent Document 1 (JP Unexamined Patent Publication No. 2004-47230), Patent Document 2 (JP Unexamined Patent Publication No. 2007-280751) and Patent Document 3 (JP Patent Application No. 2008-146932).

As shown in Fig. 12, the fuel cell of Patent Document 1 is constituted such that a membrane-electrode-assembly 101 (hereinafter, referred to as an MEA: Membrane-Electrode-Assembly) is sandwiched by a pair of plate-like conductive separators 102 and 102.

The MEA 101 is made up of a polymer electrolyte membrane 111, and a pair of electrode layers 112 and 112 placed on both surfaces of the electrolyte membrane 111. The electrode layers 112 are each made up of a catalyst layer 113 placed on the surface of the polymer electrolyte membrane 111 and a gas diffusion layer 114 placed on the catalyst layer 113.

In order to enhance handling ability, the MEA 101 is held at a circumferential edge portion thereof (also referred to as an outer circumferential portion) by a frame member 115 formed like a picture frame. Inner edge portions of the frame member 115 are each positioned between the catalyst layer 113 and the gas diffusion layer 114. In other words, each of the gas diffusion layers 114 is constituted so as to run on the frame member 115. Here, the MEA 101 including the frame member 115 is referred to as an electrode-membrane-frame-assembly 103.

In the separators 102, reaction gas flow passages 121 are formed to which a reaction gas (a fuel gas or an oxidant gas) is supplied. The fuel gas is supplied to the reaction gas flow passage 121 of one of the separators 102, and the oxidant gas is supplied to the reaction gas flow passage 121 of the other separator 102, by which inside the MEA 101, electrochemical reaction occurs, thereby generating electric power and heat.

At a position of each of the separators 102 opposed to the frame member 115, a seal member 122 made of resin is provided in order to block or suppress leakage of the reaction gas outside.

Moreover, in Patent Document 2, there has been disclosed a technique of blocking clearances formed between steps provided in the separators and outer edges of the gas diffusion layers by a number of weir-like seals to thereby enhance power generation performance.

### PATENT DOCUMENTS

Patent Document 1: JP Unexamined Patent Publication No. 2004-47230
Patent Document 2: JP Unexamined Patent Publication No. 2007-280751
Patent Document 3: JP Patent Application No. 2008-146932

### SUMMARY OF THE INVENTION

### SUBJECTS TO BE SOLVED BY THE INVENTION

However, in the conventional fuel cell as in Patent Documents 1 or 2, there is still possibility of improvements form the viewpoint of further enhancing the power generation performance.

Accordingly, it is an object of the present invention to provide a fuel cell that can further enhance the power generation performance.

### MEANS FOR SOLVING THE SUBJECT

In order to achieve the above object, the present invention is configured as follows.

According to the present invention, there is provided a fuel cell as defined in claim 1.

According to the present invention, there is provided a manufacturing method of a fuel cell as defined in claim 9.

### EFFECTS OF THE INVENTION

The fuel cell of the present invention and the manufacturing method thereof can further enhance the power generation performance.

### BRIEF DESCRIPTION OF THE DRAWINGS

These and other aspects and features of the present invention will become clear from the following description taken in conjunction with the preferred embodiment thereof with the accompanying drawings, in which:
Fig. 1 is a cross-sectional view schematically showing a basic structure of a fuel cell according to a first embodiment of the present invention;
Fig. 2 is a partial enlarged cross-sectional view of the fuel cell shown in Fig. 1;
Fig. 3 is a partial enlarged cross-sectional view showing a state before an electrode-membrane-frame assembly and paired separators are combined in the fuel cell shown in Fig. 1;
Fig. 4 is a partial enlarged cross-sectional view showing a first modified example of the fuel cell shown in Fig. 3;
Fig. 5 is a partial enlarged cross-sectional view showing a second modified example of the fuel cell shown in Fig. 3;
Fig. 6 is a partial enlarged cross-sectional view showing a third modified example of the fuel cell shown in Fig. 3;
Fig. 7 is a partial enlarged cross-sectional view showing a fourth modified example of the fuel cell shown in Fig. 3;
Fig. 8 is an exploded perspective view showing the basic structure of a fuel cell stack made up of a plurality of fuel cells shown in Fig. 1 coupled together;
Fig. 9 is a partial enlarged cross-sectional view schematically showing a structure of a fuel cell according to a second embodiment of the present invention;
Fig. 10 is a partial enlarged cross-sectional view showing a state before an electrode-membrane-frame assembly and paired separators are combined in the fuel cell shown in Fig. 9;
Fig. 11 is a plane view schematically showing a state that a seal member is provided with a part of clearance between a second seal member and a gas diffusion layer.
Fig. 12 is a cross-sectional view showing a state before an electrode-membrane-frame assembly and paired separators are combined in the conventional fuel cell.

### MODES FOR CARRYING OUT THE INVENTION

### (Findings underlying the invention)

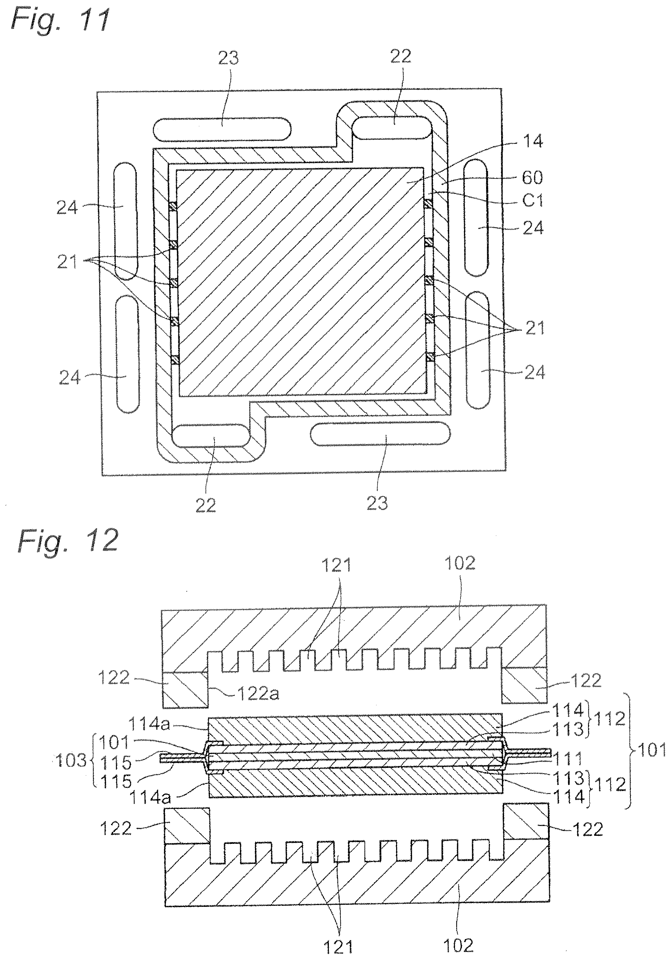

A conventional fuel cell is manufactured by sandwiching the electrode-membrane-frame assembly 103 between the pair of separators 102 and 102 from the state shown in Fig. 12 to combine them. Respective parts of the fuel cell are designed so that an outer edge 114a of each of the gas diffusion layers 114 and an inner edge 122a of each of the seal members 122 are brought into contact with each other without any clearance.

However, when the conventional fuel cells are mass-produced, placing displacement and tolerance (about ±0.5 mm) at the time of combination may cause a clearance between the outer edge 114a of the gas diffusion layer 114 and the inner edge 122a of the seal member 122. If the clearance is caused between the outer edge 114a and the inner edge 122a, a reaction gas supplied inside the fuel cell may be discharged outside the fuel cell through the clearance without passing through the reaction gas flow passage 121. Hereinafter, this phenomenon is referred to as a wraparound phenomenon of the gas. If this wraparound phenomenon occurs, usage efficiency of the reaction gas will decrease, and power generation performance of the fuel cell will decrease.

As a method for suppressing the wraparound phenomenon of the gas, a technique of increasing a volume of the seal member 122 can be considered. In this case, it is considered that the clearance can be filled by compressing the seal member 122 to elastically deform the same at the time of combination. However, in this case, since the volume of the seal member 122 is increased, it naturally leads to an increase in cost.

After earnest consideration, the inventor, et al. have found that according to the constitution of the polymer fuel cell disclosed in Patent Document 2, although the wraparound phenomenon of the gas can be surely suppressed, the power generation performance is not sufficient. That is, in the polymer electrolyte fuel cell of Patent Document 2, a part of the clearance formed by the step provided in the separator and the outer edge of the gas diffusion layer is brought into contact with the polymer electrolyte membrane or the catalyst layer. This brings the polymer electrolyte membrane or the catalyst layer into direct contact with the reaction gas, so that a portion making the direct contact is deteriorated, thereby decreasing the power generation performance.

Consequently, as a result of earnest consideration, the present inventors, et al. have found that at least any one of the seal member 122 and the gas diffusion layer 114 is squashed by the other in a thickness direction, by which even if the placing displacement and tolerance are caused, the clearance can be filled with the squashed, and deformed portion without increasing the volume of the seal member 122. Moreover, it has been found that the frame member is provided on an outer circumferential area of the polymer electrolyte membrane, and the seal member is provided on the frame member so as to run on the gas diffusion layer, by which the clearance formed between the outer edge of the gas diffusion layer and the frame member is not brought into contact with the polymer electrolyte membrane or the catalyst layer, so that the deterioration caused by the direct contact between the polymer electrolyte membrane or the catalyst layer, and the reaction gas can be prevented. Based on these findings, the inventor, et al. have achieved the following invention.

According to a first aspect of the present invention, there is provided a fuel cell as defined in claim 1.

According to a second aspect of the present invention, there is provided the fuel cell according to the first aspect, wherein a contact pressure between the seal member and the outer circumferential portion of the gas diffusion layer is smaller than a contact pressure between the seal member and the frame member.

According to a third aspect of the present invention, there is provided the fuel cell according to the first or second aspect, wherein both the seal member and the gas diffusion layer are squashed.

According to a fourth aspect of the present invention, there is provided the fuel cell according to any one of the first to third aspects, wherein the seal member is placed on a surface of the separator.

According to a fifth aspect of the present invention, there is provided the fuel cell according to the fourth aspect, wherein the seal member is placed on the surface of the separator by injection molding.

According to a sixth aspect of the present invention, there is provided the fuel cell according to any one of the first to fifth aspects, further comprising an annular second seal member made of resin, which is provided between the separator and the frame member, wherein
the second seal member is arranged with a clearance with respect to an outer edge of the gas diffusion layer, and
the seal member is provided so as to block a part of the clearance.

According to a seventh aspect of the present invention, there is provided the fuel cell according to the sixth aspect, wherein the seal member and the second seal member are integrally formed of a same resin material.

According to an eighth aspect of the present invention, there is provided the fuel cell according to any one of the first to seventh aspects, wherein the gas diffusion layer comprises a porous member mainly containing conductive particles and a polymer resin.

According to a ninth aspect of the present invention, there is provided a manufacturing method of a fuel cell as defined in claim 9.

According to a tenth aspect of the present invention, there is provided the manufacturing method of the fuel cell according to the ninth aspect, wherein before combining the electrode-membrane-frame-assembly and the separator, the seal member is formed so that a distance between the seal member and the frame member is made shorter than a distance between the seal member and the gas diffusion layer.

According to an 11th aspect of the present invention, there is provided the manufacturing method of the fuel cell according to the ninth or tenth aspect, wherein before combining the electrode-membrane-frame-assembly and the separator, the outer circumferential portion of the gas diffusion layer is inclined so as to follow a shape of the seal member.

According to a 12th aspect of the present invention, there is provided the fuel cell according to any one of the ninth to 11th aspects, wherein the seal member is placed on a surface of the separator by injection molding.

According to a 13rd aspect of the present invention, there is provided the manufacturing method of the fuel cell according to any one of the ninth to 12th aspects, wherein the gas diffusion layer comprises a porous member mainly containing conductive particles and a polymer resin.

In the following, with reference to the drawings, a description will be given of embodiments of the present invention. It is noted that, throughout the drawings, referred to in the following, identical reference symbols are allotted to the identical or corresponding components, and the
description thereof will not be repeated.

### <<First Embodiment>>

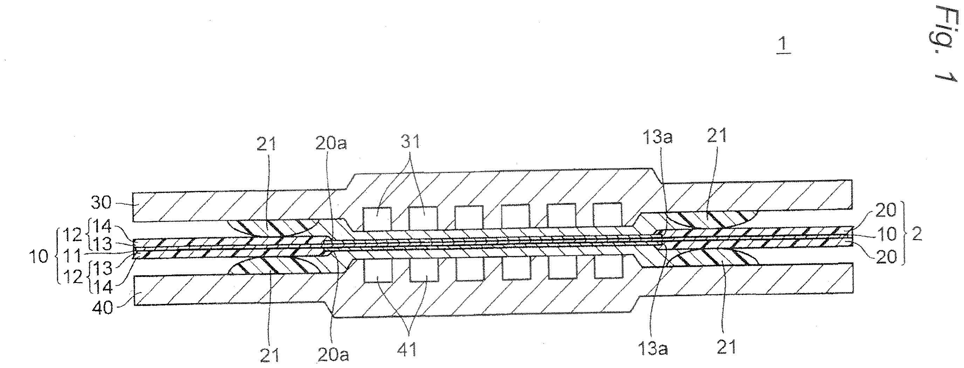

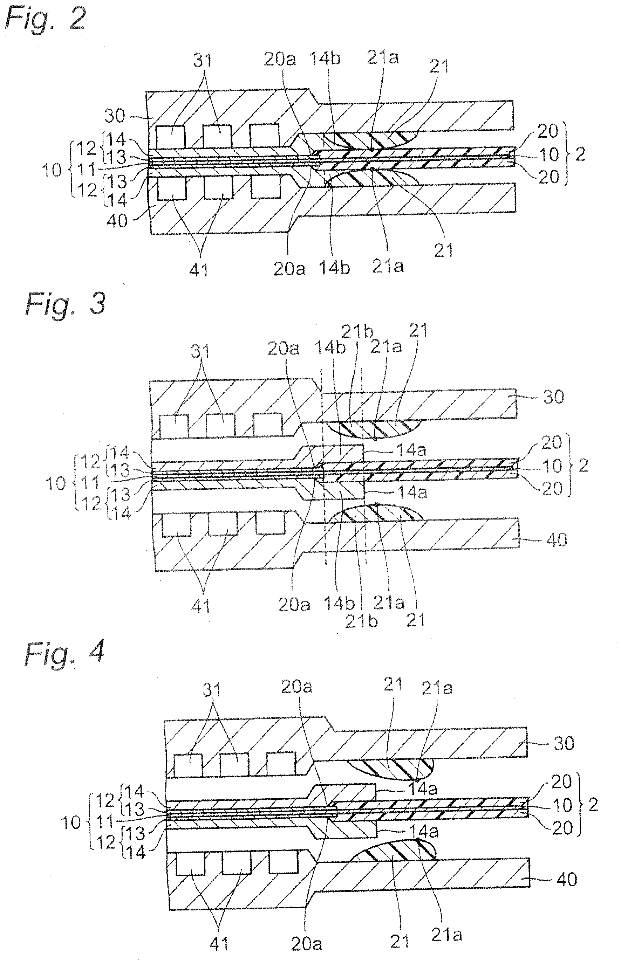

In the following, a description will be given of a fuel cell according to a first embodiment of the present invention. Fig. 1 is a cross-sectional view schematically showing a basic structure of the fuel cell according to the first embodiment of the present invention. Fig. 2 is a partial enlarged cross-sectional view of the fuel cell.

The fuel cell according to the first embodiment is a polymer electrolyte fuel cell which causes a fuel gas containing hydrogen and an oxidant gas containing oxygen such as air to electrochemically react with each other, such that electric power and heat are simultaneously produced. It is noted that the present invention is not limited to the polymer electrolyte fuel cell, and is applicable to various fuel cells.

As shown in Fig. 1, a fuel cell 1 according to the first embodiment includes an electrode-membrane-frame assembly 2 and paired separators 30 and 40 being arranged such that the electrode-membrane-frame assembly 2 is interposed therebetween. The electrode-membrane-frame assembly 2 includes an MEA (membrane electrode assembly) 10 and a casing trim-like frame member 20 arranged on the outer circumferential region (peripheral portion) of the MEA 10.

The MEA 10 includes a polymer electrolyte membrane 11 and paired electrode layers 12 respectively placed on the opposing faces of the polymer electrolyte membrane 11. One of the paired electrode layers 12 is the anode electrode, and the other one is the cathode electrode. Each electrode layer 12 includes a catalyst layer 13 and a gas diffusion layer 14. The catalyst layer 13 is placed on the surface of the polymer electrolyte membrane 11, and the gas diffusion layer 14 is placed on the catalyst layer 13.

The polymer electrolyte membrane 11 is greater in size than the catalyst layer 13 and the gas diffusion layer 14, and is provided such that its outer circumferential region sticks out from the catalyst layer 13 and the gas diffusion layer 14. On the outer circumferential region (peripheral portion) of the polymer electrolyte membrane 11, the frame member 20 is provided.

An inner edge 20a of the frame member 20 is positioned between the catalyst layer 13 and the gas diffusion layer 14. In other words, the gas diffusion layer 14 is constituted so as to run on the frame member 20. Further, in other words, the gas diffusion layer 14 is provided on the catalyst layer 13 and the frame member 20 so that an outer edge 14a of the gas diffusion layer 14 is positioned on outer side relative to the inner edge 20a of the frame member 20 as seen from a thickness direction (vertical direction of Fig. 1) of the polymer electrolyte membrane 11.

The separator 30 is provided on one of the gas diffusion layers 14. The separator 40 is provided on the other gas diffusion layer 14. Between the separator 30 and the frame member 20, and between the separator 4 and the frame member 20, seal members 21 made of resin are provided, respectively.

The seal member 21 is formed annularly, and is provided so as to bring into contact with both the separator 30 and the frame member 20, or both the separator 40 and the frame member 20. A contact pressure between the seal member 21 and the frame member 20 is higher than a pressure at which the reaction gas supplied inside the fuel cell 1 tries to flow outside. This prevents the reaction gas from leaking outside.

Moreover, the seal member 21 is provided to bring into contact with an outer circumferential portion 14b of the gas diffusion layer 14, and squash the outer circumferential portion 14b in the thickness direction of the polymer electrolyte membrane 11. This prevents the clearance from being caused between the seal member 21 and the gas diffusion layer 14.

A contact pressure between the seal member 21 and the outer circumferential portion 14b of the gas diffusion layer 14 is smaller than the contact pressure between the seal member 21 and the frame member 20. This can prevent trouble that a reaction force generated by compressing the outer circumferential portion 14b of the gas diffusion layer 14 perforates the polymer electrolyte membrane 11, thereby decreasing tolerance and power generation performance of the polymer electrolyte membrane 11, or the like. The "contact pressure" refers to, for example, a maximum pressure (kg/cm² or kg/m) inside a contact area.

According to the fuel cell of the present first embodiment, the seal member 21 is provided to bring into contact with the frame member 20, and squash the outer circumferential portion 14b of the gas diffusion layer 14 in the thickness direction of the polymer electrolyte membrane 11. This can eliminate the clearance between the seal member 21 and the gas diffusion layer 14, and the wraparound phenomenon of the gas can be suppressed, thereby further enhancing the power generation performance of the fuel cell. Furthermore, when seen in the thickness direction of the polymer electrolyte membrane 11, the outer circumferential portion 14b of the gas diffusion layer 14, which is a portion not overlapping the catalyst layer 13, can be squashed. This can inhibit the reaction gas from flowing through the outer circumferential portion 14b of the gas diffusion layer 14. Thereby, the reaction gas that is not supplied to the catalyst layer 13 and does not contribute to power generation reaction can be inhibited from flowing through the outer circumferential portion 14b of the gas diffusion layer, which enables the reaction gas to be more effectively utilized.

Next, a more detailed description will be given of members structuring the fuel cell 1.

The polymer electrolyte membrane 11 is preferably a polymer membrane having hydrogen ion conductivity. As the polymer electrolyte membrane 11, though it is not particularly limited, for example, fluorine-base polymer electrolyte membrane made of perfluorocarbon sulfonic acid (e.g., Nafion (registered trademark) available from DuPont (United States), Aciplex (registered trademark) available from Asahi Kasei Corporation, Flemion (registered trademark) available from Asahi Glass Co., Ltd.,), and a variety of hydrocarbon-base electrolyte membranes can be used. The material of the polymer electrolyte membrane 11 is only required to be capable of selectively moving the hydrogen ions. Though the shape of the polymer electrolyte membrane 11 is not particularly limited, it is substantially rectangular in the first embodiment.

The catalyst layer 13 is preferably a layer containing a catalyst for the oxidation-reduction reaction of hydrogen or oxygen. Preferably, the catalyst layer 13 is provided such that the outer edge 13a is positioned on the inner side relative to the center portion of the seal member 21, as seen from the thickness direction of the polymer electrolyte membrane 11. In the case where the outer edge 13a of the catalyst layer 13 is on the outer side relative to the center portion of the seal member 21, the reactant gas having passed through the inside of the porous catalyst layer 13 tends to flow toward the outside (external leakage), resulting in loss of gas. Further, though the catalyst layer 13 is not particularly limited, for example, it can be configured by a porous member whose main components are carbon powder bearing a platinum-base metal catalyst and a polymer material having proton conductivity. The catalyst layer 13 is only required to have electric conductivity and catalytic activity for the oxidation-reduction reaction of the hydrogen and the oxygen. Though the shape of the catalyst layer 13 is not particularly limited, it is substantially rectangular in the first embodiment. The catalyst layer 13 can be formed by applying or spraying an ink for forming a catalyst layer on the surface of the polymer electrolyte membrane 11. Further, it may be prepared through general transfer process.

Preferably, the gas diffusion layer 14 is configured as a so-called base material-less gas diffusion layer, which is configured without use of carbon fibers as the base material. Specifically, the gas diffusion layer 14 is configured by a porous member whose main components are electrically conductive particles and polymer resin. Here, the "porous member whose main components are electrically conductive particles and polymer resin" refers to a porous member having the structure which is solely supported by the electrically conductive particles and the polymer resin without use of carbon fibers as the base material (a so-called self-supporting structure). In the case where the porous member is manufactured by the electrically conductive particles and the polymer resin, for example, surfactant and dispersing solvent are used. In this case, during the manufacturing process, the surfactant and the dispersing solvent are removed by calcination. Here, in some cases, they may not fully be removed and may remain in the porous member. Accordingly, the "porous member whose main components are electrically conductive particles and polymer resin" means that, so long as it is the self-supporting structure which does not use carbon fibers as the base material, such remaining surfactant and dispersing solvent may be contained in the porous member. Further, so long as it is the self-supporting structure which does not use carbon fibers as the base material, other materials (e.g., short carbon fibers or the like) may be contained in the porous member.

The gas diffusion layer 14 can be manufactured by mixing a mixture containing polymer resin and electrically conductive particles, extruding the mixture, rolling the mixture, and then calcinating the mixture. Specifically, after carbon being the electrically conductive particles, dispersing solvent, and surfactant are fed into an agitating mixer, they are mixed to be ground and granulated. Thus, the carbon is dispersed in the dispersing solvent. Subsequently, fluororesin being the polymer resin is further fed into the agitating mixer to be agitated and mixed, so that the carbon and the fluororesin are dispersed. The obtained mixture is rolled into a sheet-shape, and calcinated to remove the dispersing solvent and the surfactant. Thus, the sheet-like gas diffusion layer 14 can be manufactured.

The material of the electrically conductive particles structuring the gas diffusion layer 14 may include, for example, carbon materials such as graphite, carbon black, activated carbon, and the like. The carbon black may include acetylene black (AB), furnace black, Ketjen black, Vulcan, and the like. These materials may solely be used. Alternatively, a plurality of materials may be used in combination. Further, the carbon material may be in any raw-material form such as powder, fibrous, particulate, and the like.

The material of the polymer resin structuring the gas diffusion layer 14 may include PTFE (polytetrafluoroethylene), FEP (tetrafluoroethylene-hexafluoropropylene copolymer), PVDF (polyvinylidene fluoride), ETFE (tetrafluoroethylene-ethylene copolymer), PCTFE (polychlorotrifluoroethylene), PFA (tetrafluoroethylene-perfluoroalkyl vinyl ether copolymer), and the like. Among others, it is preferable to use PTFE as the material of the polymer resin from the viewpoint of heat resistance, water repellency, and chemical resistance. The raw-material form of PTFE may include dispersion, powder, and the like. Among others, it is preferable to employ dispersion as the raw-material form of PTFE from the viewpoint of workability. It is noted that the polymer resin structuring the gas diffusion layer 14 has the function as the binder coupling the electrically conductive particles with one another. Further, since the polymer resin has water repellency, it also has the function of confining water inside the system in the fuel cell (i.e., water retentivity).

Further, as described above, the gas diffusion layer 14 may contain, in addition to the electrically conductive particles and the polymer resin, a slight amount of surfactant and dispersing solvent used during manufacture. The dispersing solvent may include, for example, water, alcohols such as methanol, ethanol, and the like, and glycols such as ethylene glycol. The surfactant may include, for example, nonionic surfactant such as polyoxyethylene alkyl ether, and amphoteric surfactant such as alkyl amine oxide. The amount of the dispersing solvent and surfactant used during manufacture may be set as appropriate in accordance with the type of the electrically conductive particles, the type of the polymer resin, the mixing ratio thereof, and the like. It is noted that, generally, as the amount of dispersing solvent and the amount of surfactant are greater, the polymer resin and the electrically conductive particles become easier to evenly be dispersed. On the other hand, there is a tendency that flowability becomes higher and formation of the gas diffusion layer into a sheet-shape becomes difficult. It is noted that the surfactant can be selected as appropriate by the type of material of the electrically conductive particles and the type of the dispersing solvent. Further, surfactant may not be used.

It is noted that, the gas diffusion layer 14 may be identical or different in structure between the cathode electrode side and the anode electrode side. For example, it is possible to use a gas diffusion layer using carbon fibers as the base material as one of the cathode electrode side gas diffusion layer and the anode electrode side gas diffusion layer, and a base material-less gas diffusion layer having the structure described above as the other gas diffusion layer.

The frame member 20 is a member provided for improving the handleability of the MEA 10. As the material of the frame member 20, general thermoplastic resin, thermosetting resin, and the like can be used. For example, as the material of the frame member 20, silicone resin, epoxy resin, melamine resin, polyurethane based resin, polyimide based resin, acrylic resin, ABS resin, polypropylene, liquid crystal polymer, polyphenylene sulfide resin, polysulfone, glass fiber reinforced resin, and the like can be used. Though the shape of the frame member 20 is not particularly limited, it is substantially rectangular annular in the first embodiment.

Preferably, the separators 30 and 40 are the members for mechanically fixing the MEA 10. Preferably, the separators 30 and 40 are made of a carbon-containing material or a metal-containing material. In the case where the separators 30 and 40 are made of a carbon-containing material, the separators 30 and 40 can be formed by supplying raw material powder, which is a mixture of carbon powder and resin binder, into a mold assembly, and applying pressure and heat to the raw material powder supplied into the mold assembly. In the case where the separators 30 and 40 are made of a metal-containing material, the separators 30 and 40 may each be a metal plate. Further, the separators 30 and 40 may each be a titanium or stainless steel-made plate having its surface gold-plated.

The main surface (hereinafter also referred to as the electrode face) of the separator 30 which is brought into contact with the gas diffusion layer 14 is provided with a fuel gas-use gas flow channel 31. Further, the main surface (hereinafter also referred to as the electrode face) of the separator 40 which is brought into contact with the gas diffusion layer 14 is provided with an oxidant gas-use gas flow channel 41. By the fuel gas being supplied to the one electrode layer 12 through the gas flow channel 31 and by the oxidant gas being supplied to the other electrode layer 12 through the gas flow channel 41, electrochemical reaction occurs, whereby electric power and heat are produced.

Preferably, the seal member 21 is made of synthetic resin having appropriate mechanical strength and flexibility. The material of the seal member 21 may be a compound such as a rubber material, thermoplastic elastomer, adhesive, and the like. Specific examples of the seal material of the seal member 21 may include fluororubber, silicone rubber, natural rubber, EPDM, butyl rubber, chlorinated butyl rubber, brominated butyl rubber, butadiene rubber, styrene-butadiene copolymer, ethylene vinyl acetate rubber, acrylic rubber, polyisopropylene polymer, perfluorocarbon, polybenzimidazole, thermoplastic elastomer such as polystyrene-base, polyolefin-base, polyester-base, and polyamide-base thermoplastic elastomer, adhesive using latex such as isoprene rubber, butadiene rubber, and the like, or adhesive using liquid polybutadiene, polyisoprene, polychloroprene, silicone rubber, fluororubber, acrylonitrile-butadiene rubber, and the like, although the seal material is not limited to those compounds. Further, these compounds may solely be used, or two or more of them may be used as a mixture or as a compound. Still further, as the seal material of the seal member 21, what can specifically be used is Santoprene 8101-55, which is thermoplastic polyolefin elastomer containing polypropylene and EPDM. Though the shape of the seal member 21 is not particularly limited, it is substantially rectangular annular in the first embodiment.

Next, a manufacturing method of the fuel cell 1 according to the present first embodiment will be described.

First, as shown in Fig. 3, the electrode-membrane-frame-assembly 2 and the separators 30 and 40 are prepared. In the present first embodiment, a cross section of each of the seal members 21 is formed into a semi-elliptical shape. Moreover, the seal members 21 are placed on surfaces of the separators 30 and 40.

Subsequently, when seen in the thickness direction of the polymer electrolyte membrane 11, an inner circumferential portion 21b on an inner side (on the left side of Fig. 3) with respect to a top portion 21a of the seal member 21, and the outer circumferential portion 14b of the gas diffusion layer 14 are aligned so as to overlap each other.

Subsequently, the electrode-membrane-frame-assembly 2 and the respective separators 30 and 40 are combined. This allows the inner portions 21b of the seal members 21 to squash the outer circumferential portions 14b of the gas diffusion layers 14 in the thickness direction of the polymer electrolyte membrane 11, and brings the top portions 21a of the seal members 21 into contact with the frame member 20. At this time, deformation of the outer circumferential portions 14b of the gas diffusion layers 14 prevents the clearance from occurring between the seal members 21 and the gas diffusion layers 14.

As described above, the fuel cell 1 shown in Fig. 2 is manufactured.

According to the manufacturing method of the fuel cell of the present first embodiment, the seal members 21 is brought into contact with the frame member 20, and the electrode-membrane-frame-assembly 2 and the separators 30 and 40 are combined so that the outer circumferential portions 14b of the gas diffusion layers 14 are squashed in the thickness direction of the polymer electrolyte membrane 11. This can eliminate the clearances between the seal members 21 and the gas diffusion layers 14, and suppress the wraparound phenomenon of the gas, thereby further enhancing the power generation performance.

It is preferable that the gas diffusion layers 14 comprise a porous member mainly containing conductive particles and a polymer resin, as described before. In this case, since the porous member is elastic, the clearance can be more surely prevented from occurring between the seal member 21 and the gas diffusion layer 14 by elastic deformation of the porous member when it is squashed.

If members having high rigidity are used as the gas diffusion layers 14, there is a possibility that the reaction force caused when the gas diffusion layers 14 and the seal members 21 make contact causes crack or chip in the seal members 21, the separators 30 and 40, and the frame member 20. Therefore, it is preferable that the gas diffusion layers 14 are each made of a member having low rigidity.

While in the foregoing, the outer circumferential portion 14b of the gas diffusion layer 14 is squashed, the present invention is not limited thereto. The inner circumferential portion 21b of the seal member 21 may be squashed. In this case, a member having high rigidity can be used as the gas diffusion layer 14. Moreover, both of the outer circumferential portion 14b of the gas diffusion layer 14 and the inner circumferential portion 21b of the seal member 21 may be squashed. In this case, the seal member 21 and the gas diffusion layer 14 are attached firmly to each other, so that the occurrence of the clearance between the seal member 21 and the gas diffusion layer 14 can be more surely suppressed. Moreover, options of the materials of the gas diffusion layer 14 and the seal member 21 can be broadened.

Moreover, it is preferable that the seal members 21 are placed on surfaces of the separators 30 and 40, as described before. In this case, since the separators 30 and 40 have higher dimension accuracy and less warpage than the frame member 20, there is an advantage that a yield is high. Moreover, in the case where the seal members 21 are placed on the surfaces of the separators 30 and 40 by injection molding, there is an advantage that the injection molding is easy because of the high rigidity of the separators 30 and 40. If the seal members 21 are formed in the frame member 20 by the injection molding, there is a possibility that heat generated during the injection molding deteriorates the polymer electrolyte membrane 11. In this case, the power generation performance will decrease.

It is preferable that the seal members 21 are each formed so that the top portion 21a thereof is displaced in a direction away from the outer edge 14a of the gas diffusion layer 14, as shown in Fig. 4. In this case, the top portion 21a and the frame body 20 can be easily brought into contact with each other. Moreover, since a volume of the inner circumferential portion 21b of the seal member 21 can be made smaller, the reaction force generated by compressing the outer circumferential portion 14b of the gas diffusion layer 14 can be made smaller. This can further prevent the occurrence of the trouble that the polymer electrolyte membrane 11 is perforated, thereby decreasing the durability and the power generation performance of the polymer electrolyte membrane 11, or the like.

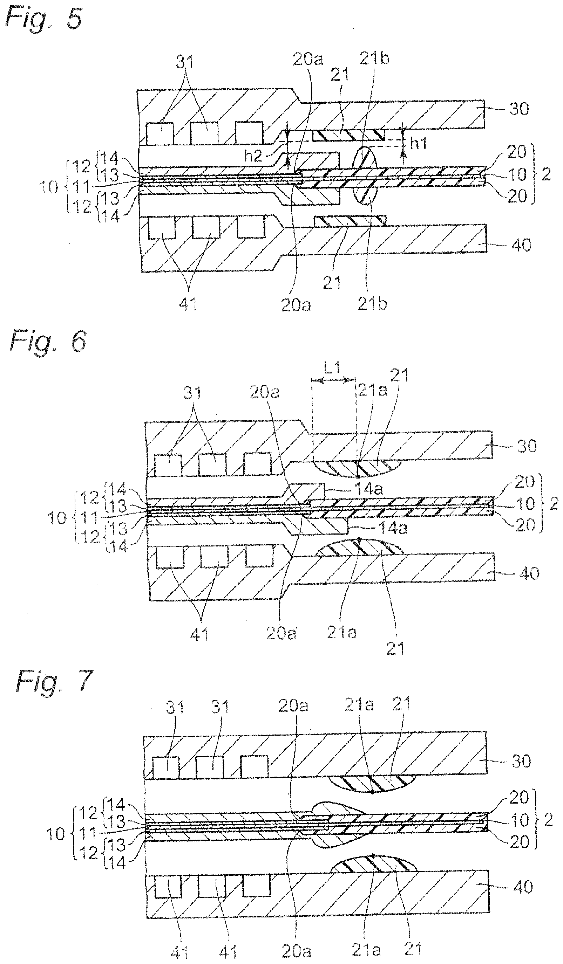

Moreover, the seal members 21 may be each formed with a rectangular cross section, as shown in Fig. 5. In this case, it is preferable that a protruding portion 20b is provided at a position opposed to the seal member 21 in the frame member 20. This makes it easy to make smaller the contact pressure between the seal member 21 and the outer circumferential portion 14b of the gas diffusion layer 14 than the contact pressure between the seal member 21 and the frame member 20.

Moreover, it is preferable that as shown in Fig. 5, the seal members 21 are each formed so that a distance h1 between the seal member 21 and the frame member 20 is shorter than a distance h2 between the seal member 21 and the gas diffusion layer 14. This makes it easy to make smaller the contact pressure between the seal member 21 and the outer circumferential portion 14b of the gas diffusion layer 14 than the contact pressure between the seal member 21 and the frame member 20.

Moreover, in the gas diffusion layers 14 and 14, positions of the outer edges 14a and 14a can be different between a cathode electrode side and an anode electrode side, as shown in Fig. 6. In this case, a length L1 of the inner circumferential portion 21b of each of the seal members 21 is made long, by which the inner portion 21b of the seal member 21 and the outer circumferential portion 14b of the gas diffusion layer 14 can be brought into contact with each other without excessively considering the positions of the outer edges 14a.

It is preferable that the outer circumferential edge portion 14b of the gas diffusion layer 14 is inclined so as to follow the shape of the seal member 21, as shown in Fig. 7. This can easily bring the top portion 21a of the seal member 21 into contact with the frame member 20, and can make smaller the reaction force generated by compressing the outer circumferential portion 14b of the gas diffusion layer 14. Accordingly, the trouble that the polymer electrolyte membrane 11 is perforated, thereby decreasing the durability and the power generation performance of the polymer electrolyte membrane 11, or the like can be further prevented.

The separators 30 and 40 are not limited to the shape having a step as shown in Figs. 1 to 6, but may be a plate-like ones as shown in Fig. 7.

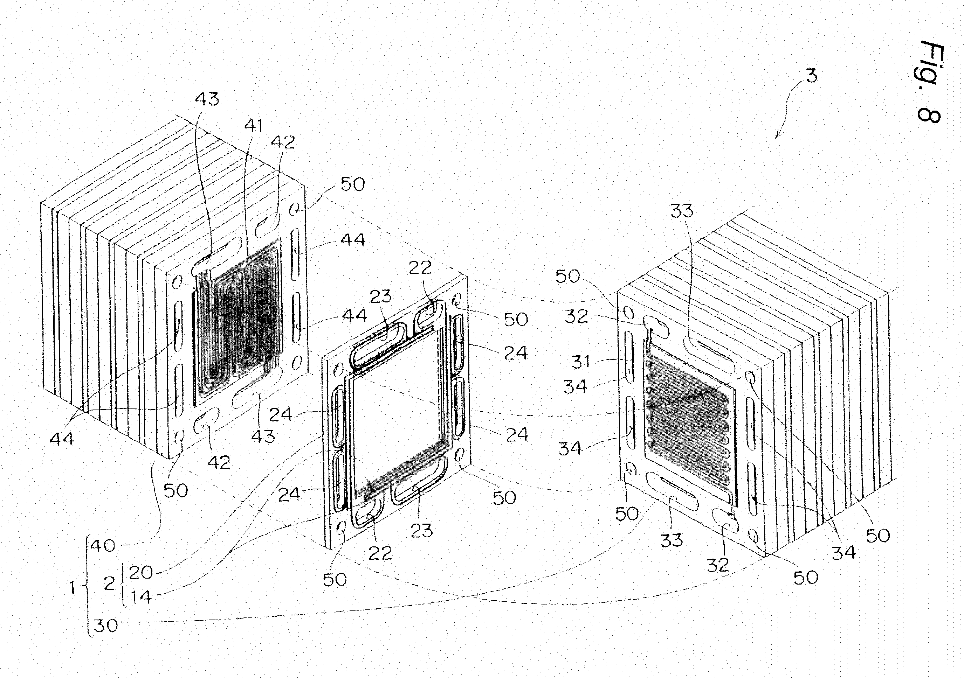

Next, a description will be given of the structure in which a plurality of fuel cells (unit cells) 1, each of which is shown in Fig. 1, are coupled in series and used as a so-called fuel cell stack. Fig. 8 is an exploded perspective view of a basic structure of a fuel cell stack 3 made up of a plurality of fuel cells 1 being coupled to one another.

In the case where a plurality of fuel cells 1 are used as the fuel cell stack 3, in order to supply the gas flow channels 31 and 41 with the reactant gas (fuel gas or oxidant gas), what is required is manifolds in each of which a pipe supplying the reactant gas is separated into branches in the number corresponding to the number of the separators 30 and 40, and the branch ends are connected to the gas flow channels 31 and 41.

Accordingly, in the first embodiment, as shown in Fig. 8, the frame member 20 and the paired separators 30 and 40 are respectively provided with fuel gas manifold holes 22, 32, and 42, which are paired through holes through which the fuel gas is supplied. Further, the frame member 20 and the paired separators 30 and 40 are respectively provided with oxidant gas manifold holes 23, 33, and 43, which are paired through holes through which the oxidant gas flows. In the state where the frame member 20 and the paired separators 30 and 40 are coupled as the fuel cell 1, the fuel gas manifold holes 22, 32, and 42 are coupled to one another, to form the fuel gas manifold. Similarly, in the state where the frame member 20 and the paired separators 30 and 40 are coupled as the fuel cell 1, the oxidant gas manifold holes 23, 33, and 43 are coupled to one another, to form the oxidant gas manifold.

Further, the frame member 20 and the paired separators 30 and 40 are respectively provided with cooling medium manifold holes 24, 34, and 44, each of which is two pairs of through holes through which cooling medium (e.g., pure water or ethylene glycol) flows. In the state where the frame member 20 and the paired separators 30 and 40 are coupled as the fuel cell 1, the cooling medium manifold holes 24, 34, and 44 are coupled, to form two pairs of cooling medium manifolds.

Further, the frame member 20 and the paired separators 30 and 40 are provided with four bolt holes 50 at their respective corner portions. A fastening bolt is inserted into each bolt hole 50. By a nut being coupled to the fastening bolt, a plurality of fuel cells 1 are fastened.

The gas flow channel 31 is provided so as to connect between a pair of fuel gas manifolds 32 and 32. The gas flow channel 41 is provided so as to connect between a pair of oxidant gas manifolds 43 and 43. It is noted that, though the gas flow channels 31 and 41 are each shown as a serpentine-type flow channel in Fig. 8, they may be the flow channels of other mode (e.g., linear-type flow channels).

Further, though not shown, at the main surface opposite to the electrode face of the separator 30 and at the main surface opposite to the electrode face of the separator 40, cooling medium flow channels are preferably formed, respectively. The cooling medium flow channels are formed so as to connect between two paired cooling medium manifold holes 34 and 44, respectively. That is, they are configured such that the cooling medium branches from the cooling medium manifolds on the supply side into the cooling medium flow channels, to flow through the cooling medium manifolds on the discharge side. Thus, using the heat-transfer capability of the cooling medium, it is designed such that the fuel cell 1 is maintained at a prescribed temperature suitable for the electrochemical reaction.

It is noted that, in the foregoing, the description has been given of a so-called internal manifold scheme fuel cell as an example, in which the manifold holes of fuel gas, oxidant gas, and coolant are provided to the separators 30 and 40, and which is designed such that the supply manifolds of fuel gas, oxidant gas, and coolant are formed when being stacked. However, the present invention is not limited thereto. For example, it may be a so-called external manifold scheme fuel cell in which the supply manifolds of fuel gas, oxidant gas, and coolant are provided at the side faces of the fuel cell stack 3. In this case also, the similar effect can be obtained. Further, it may be a so-called internal humidification scheme fuel cell in which the separators 30 and 40 are each formed by a porous conductor, and the pressure of the coolant flowing through the cooling medium flow channel is set to be higher than the pressure of the reactant gas flowing through the gas flow channels 31 and 41, such that part of the coolant transmits through the separators 30 and 40 toward the electrode face, to humidify the polymer electrolyte membrane 11.

Further, in the foregoing, though the separators 30 and 40 are respectively provided with the gas flow channels 31 and 41, the present invention is not limited thereto. For example, the one gas diffusion layer 14 may be provided with the gas flow channel 31, and the other gas diffusion layer 14 may be provided with the gas flow channel 41. Further, both the separator 30 and the one gas diffusion layer 14 may be provided with the gas flow channel 31. Still further, both the separator 40 and the other gas diffusion layer 14 may be provided with the gas flow channel 41.

### <<Second Embodiment>>

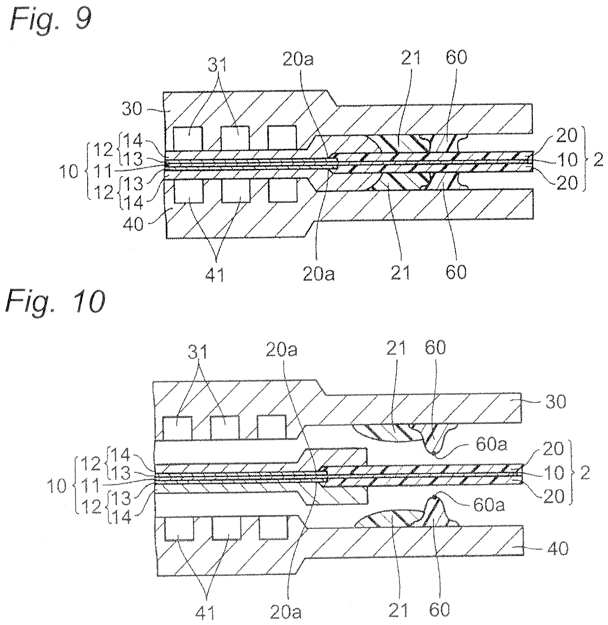

Next, a fuel cell according to a second embodiment of the present invention will be described. Fig. 9 is a partially-enlarged cross-sectional view schematically showing a structure of the fuel cell according to the second embodiment of the present invention. The fuel cell according to the present second embodiment is different from the fuel cell according to the first embodiment in that second seal members 60 are included between the separators 30 and 40 and the frame member 20, respectively.

The second seal member 60 is formed annuiarly, and is provided so as to bring into contact with both the separator 30 and the frame member 20, or both the separator 40 and the frame member 20. Moreover, the second seal member 60 is provided adjacent to the seal member 21 outside. The contact pressure between the seal member 21 and the frame member 20 is higher than the pressure at which the reaction gas supplied inside the fuel cell 1 tries to flow outside.

According to the fuel cell of the present second embodiment, further including the second seal members 60 enables the clearances between the separators 30 and 40 and the frame member 20 to be sufficiently sealed with the second seal members 60. This can more surely prevent the reaction gas from leaking outside. Furthermore, when seen in the thickness direction of the polymer electrolyte membrane 11, the outer circumferential portion 14b of the gas diffusion layer 14, which is a portion not overlapping the catalyst layer 13, can be squashed by the seal member 21. This can inhibit the reaction gas from flowing through the outer circumferential portion 14b of the gas diffusion layer 14. Thereby, the reaction gas that is not supplied to the catalyst layer 13 and does not contribute to power generation reaction can be inhibited from flowing through the outer circumferential portion 14b of the gas diffusion layer 14, which enables the reaction gas to be more effectively utilized. In the case where the seal members 21 are provided so as to block entire clearances C1 between the second seal members 60 and the gas diffusion layers 14, the clearance between the separators 30 and 40 and the frame member 20 can be sealed doubly with the seal members 21 and the second seal members 60. This can more surely prevent the reaction gas from leaking outside.

Since the second seal member 60 can prevent the reaction gas from leaking outside, the seal member 21 need not prevent the reaction gas from leaking outside, but only needs to fill the clearance between the gas diffusion layer 14 and the second seal member 60. Therefore, as shown in Fig. 10, before the separators 30 and 40 and the electrode-membrane-frame-assembly 2 are combined, the seal members 21 may be formed so that the top portion 21a thereof is lower than a top portion 60a of the second seal member 60.

Moreover, the seal member 21 and the second seal member 60 may be made of different materials. For example, the seal member 21 may be made of a softer resin material than the second seal member 60. In this case, since the seal member 21 easily deforms elastically, the clearance between the gas diffusion layer 14 and the second seal member 60 can be more surely filled.

Alternatively, the seal member 21 and the second seal member 60 may be integrally formed of the same resin material. In this case, since the seal member 21 and the second seal member 60 can be simultaneously formed, increase in manufacturing step can be suppressed.

Moreover, the seal member 21 may be provided so as to block a part of the clearance C1, as shown in Fig. 11, in place of blocking the entire clearance C1 between the second seal member 60 and the gas diffusion layer 14. In this case as well, since the reaction gas can be inhibited from being discharged outside the fuel cell through the clearance C1 (the wraparound phenomenon of the gas), the power generation performance can be made higher than the conventional fuel cell. When seen in the thickness direction of the polymer electrolyte membrane 11, the outer circumferential portion 14b of the gas diffusion layer 14, which is a portion not overlapping the catalyst layer 13, can be partially squashed. Partially squashing the outer circumferential portion 14b of the gas diffusion layer 14 can inhibit the reaction gas from flowing through the outer circumferential portion 14b of the gas diffusion layer 14. Thereby, the reaction gas that is not supplied to the catalyst layer 13 and does not contribute to power generation reaction can be inhibited from flowing through the outer circumferential portion 14b of the gas diffusion layer 14, which enables the reaction gas to be more effectively utilized. Moreover, making smaller an area with which each of the seal members 21 is arranged can suppress an increase in combination load necessary for squashing the seal member 21 when the electrode-membrane-frame-assembly 2 and the separators 30 and 40 are combined. This allows members having a lower strength to be used as the separators 30 and 40, which can reduce the cost.

Moreover, according to the fuel cell of the second embodiment of the present invention, the clearance C1 formed between the outer edge of the gas diffusion layer 14 and the second seal member 60 does not bring into contact with the polymer electrolyte membrane 11 or the catalyst layer 13. Accordingly, deterioration caused by direct contact between the polymer electrolyte membrane 11 or the catalyst layer 11 and the reaction gas can be prevented.

While in Fig. 11, the example in which the plurality of seal members 21 are provided in the clearance C1 is shown, the present invention is not limited thereto. Even when the one seal member 21 is provided in the clearance C1, the wraparound phenomenon of the gas can be suppressed, and the power generation performance can be made higher than that of the conventional fuel cell.

It is noted that any combinations of the foregoing embodiments can exhibit their respective effects.

Although the present invention has fully described in connection with the preferred embodiments thereof with reference to the accompanying drawings, it is noted that various changes and modifications are apparent to those skilled in the art. Such changes and modifications are to be understood as included within the scope of the present invention as defined by the appended claims unless they depart therefrom.

The disclosure of Japanese Patent Application No. 2012-113661 filed on May 17, 2012 including specification, drawings, and claims are incorporated herein by reference in its entirety.

### Industrial Applicability

The fuel cell of the present invention can further enhance the power generation performance. Accordingly, it is useful as a fuel cell used as the drive source of a mobile object such as an automobile, a dispersed power generation system, a domestic cogeneration system, or the like. Explanation of reference numerals

- 1: fuel cell
- 2: electrode-membrane-frame assembly
- 3: fuel cell stack
- 10: MEA (membrane-electrode membrane)
- 11: polymer electrolyte membrane
- 12: electrode layer
- 13: catalyst layer
- 13a: outer edge
- 14: gas diffusion layer
- 14a: outer edge
- 14b: outer circumferential portion
- 20: frame member
- 20a: inner edge
- 20b: protruding portion
- 21: seal member
- 21a: apex portion
- 21b: inner circumferential portion
- 30, 40: separator
- 31, 41: gas flow passage
- 60: second seal member
- 60a: apex portion
- C1: clearance

## Claims

1. A fuel cell comprising:
a polymer electrolyte membrane (11);
a catalyst layer (13) provided on the polymer electrolyte membrane (11);
a frame member (20) provided on an outer circumferential area of the polymer electrolyte membrane (11);
a gas diffusion layer (14) provided on the catalyst layer (13) and the frame member (20) so that an outer edge (14a) of the gas diffusion layer (14) is positioned on outer side relative to an inner edge (20a) of the frame member (20) as seen from a thickness direction of the polymer electrolyte membrane (11);
a separator (30, 40) provided on the gas diffusion layer (14); and
a seal member (21), made of resin, which is brought into contact with both the separator (30, 40) and the frame member (20),
**characterized in that**
at least one of the seal member (21) and an outer circumferential portion (14b) of the gas diffusion layer (14) is squashed by the other in the thickness direction of the polymer electrolyte membrane (11) so as to overlap each other.

2. The fuel cell according to claim 1, wherein a contact pressure between the seal member (21) and the outer circumferential portion (14b) of the gas diffusion layer (14) is smaller than a contact pressure between the seal member (21) and the frame member (20).

3. The fuel cell according to claim 1 or 2, wherein both the seal member (21) and the gas diffusion layer (14) are squashed.

4. The fuel cell according to any one of claims 1 to 3, wherein the seal member (21) is placed on a surface of the separator (30, 40).

5. The fuel cell according to claim 4, wherein the seal member (21) is placed on the surface of the separator (30, 40) by injection molding.

6. The fuel cell according to any one of claims 1 to 5, further comprising an annular second seal member (60) made of resin, which is provided between the separator (30, 40) and the frame member (20), wherein
the second seal member (60) is arranged with a clearance (C1) with respect to the outer edge (14a) of the gas diffusion layer (14), and
the seal member is provided so as to block a part of the clearance.

7. The fuel cell according to claim 6, wherein the seal member (21) and the second seal member (60) are integrally formed of a same resin material.

8. The fuel cell according to any one of claims 1 to 7, wherein the gas diffusion layer (14) comprises a porous member mainly containing conductive particles and a polymer resin.

9. A manufacturing method of a fuel cell, comprising:
preparing an electrode-membrane-frame-assembly (2) including a polymer electrolyte membrane (11), a catalyst layer (13) provided on the polymer electrolyte membrane (11), a frame member (20) provided on an outer circumferential area of the polymer electrolyte membrane (11), and a gas diffusion layer (14) provided on the catalyst layer (13) and the frame member (20) so that an outer edge (14a) of the gas diffusion layer (14) is positioned on outer side relative to an inner edge (20a) of the frame member (20) as seen from a thickness direction of the polymer electrolyte membrane (11),
preparing a separator (30, 40) with a seal member (21) provided on a surface of the separator (30, 40); and
combining the electrode-membrane-frame-assembly (2) and the separator (30, 40) so that the seal member (21) is brought into contact with the frame member (20),
**characterized in that**
at least one of the seal member (21) and an outer circumferential portion (14b) of the gas diffusion layer (14) is squashed by the other in the thickness direction of the polymer electrolyte membrane (11) so as to overlap each other.

10. The manufacturing method of the fuel cell according to claim 9, wherein before combining the electrode-membrane-frame-assembly (2) and the separator (30, 40), the seal member (21) is formed so that a distance between the seal member (21) and the frame member (20) is made shorter than a distance between the seal member (21) and the gas diffusion layer (14).

11. The manufacturing method of the fuel cell according to claim 9 or 10, wherein before combining the electrode-membrane-frame-assembly (2) and the separator (30, 40), the outer circumferential portion (14b) of the gas diffusion layer (14) is inclined so as to follow a shape of the seal member (21).

12. The manufacturing method of the fuel cell according to any one of claims 9 to 11, wherein the seal member (21) is placed on a surface of the separator (30, 40) by injection molding.

13. The manufacturing method of the fuel cell according to any one of claims 9 to 12, wherein the gas diffusion layer (14) comprises a porous member mainly containing conductive particles and a polymer resin.

## Patentansprüche

1. Brennstoffzelle, die umfasst:
eine Polymer-Elektrolyt-Membran (11);
eine Katalysator-Schicht (13), die sich an der Polymer-Elektrolyt-Membran (11) befindet;
ein Rahmen-Element (20), das sich an einem Außenumfangsbereich der Polymer-Elektrolyt-Membran (11) befindet;
eine Gasdiffusions-Schicht (14), die an der Katalysator-Schicht (13) und dem Rahmen-Element (20) so angeordnet ist, dass ein äußerer Rand (14a) der Gasdiffusions-Schicht (14), in einer Dickenrichtung der Polymer-Elektrolyt-Membran (11) gesehen, an einer äußeren Seite relativ zu einer Innenkante (20a) des Rahmen-Elementes (20) positioniert ist;
einen Separator (30, 40), der sich an der Gasdiffusions-Schicht (14) befindet; und
ein Dichtungs-Element (21), das aus Kunststoff besteht und in Kontakt sowohl mit dem Separator (30, 40) als auch dem Rahmen-Element (20) gebracht wird,
**dadurch gekennzeichnet, dass**
das Dichtungs-Element (21) oder/und ein Außenumfangs-Abschnitt (14b) der Gasdiffusions-Schicht (14) durch das/den andere/n in der Dickenrichtung der Polymer-Elektrolyt-Membran (11) so zusammengedrückt wird/werden, dass sie einander überlappen.

2. Brennstoffzelle nach Anspruch 1, wobei ein Kontaktdruck zwischen dem Dichtungs-Element (21) und dem Außenumfangs-Abschnitt (14b) der Gasdiffusions-Schicht (14) schwächer ist als ein Kontaktdruck zwischen dem Dichtungs-Element (21) und dem Rahmen-Element (20).

3. Brennstoffzelle nach Anspruch 1 oder 2, wobei sowohl das Dichtungs-Element (21) als auch die Gasdiffusions-Schicht (14) zusammengedrückt werden.

4. Brennstoffzelle nach einem der Ansprüche 1 bis 3, wobei das Dichtungs-Element (21) an einer Oberfläche des Separators (30, 40) positioniert wird.

5. Brennstoffzelle nach Anspruch 4, wobei das Dichtungs-Element (21) mittels Spritzgießen an der Oberfläche des Separators (30, 40) positioniert wird.

6. Brennstoffzelle nach einem der Ansprüche 1 bis 5, die Des Weiteren ein ringförmiges zweites Dichtungs-Element (60) umfasst, das aus Kunststoff besteht und sich zwischen dem Separator (30, 40) und dem Rahmen-Element (20) befindet, wobei
das zweite Dichtungs-Element (60) mit einem Zwischenraum (C1) in Bezug auf den äußeren Rand (14a) der Gasdiffusions-Schicht (14) angeordnet ist, und
das Dichtungselement einen Teil des Zwischenraums versperrt.

7. Brennstoffzelle nach Anspruch 6, wobei das Dichtungs-Element (21) und das zweite Dichtungs-Element (60) integral aus dem gleichen Kunststoffmaterial ausgebildet sind.

8. Brennstoffzelle nach einem der Ansprüche 1 bis 7, wobei die Gasdiffusions-Schicht (14) ein poröses Element umfasst, das hauptsächlich leitende Teilchen und einen Polymer-Kunststoff umfasst.

9. Verfahren zum Herstellen einer Brennstoffzelle, das umfasst:
Fertigen einer Elektroden-Membran-Rahmen-Baugruppe (2), die eine Polymer-Elektrolyt-Membran (11), eine Katalysator-Schicht (13), die sich an der Polymer-Elektrolyt-Membran (11) befindet, ein Rahmen-Element (20), das sich an einem Außenumfangsbereich der Polymer-Elektrolyt-Membran (11) befindet, sowie eine Gasdiffusions-Schicht (14) enthält, die an der Katalysator-Schicht (13) und dem Rahmen-Element (20) so angeordnet ist, dass ein äußerer Rand (14a) der Gasdiffusions-Schicht (14), in einer Dickenrichtung der Polymer-Elektrolyt-Membran (11) gesehen, an einer äußeren Seite relativ zu einer Innenkante (20a) des Rahmen-Elementes (20) positioniert ist,
Fertigen eines Separators (30, 40) mit einem an einer Oberfläche des Separators (30, 40) vorhandenen Dichtungs-Element (21); sowie
Verbinden der Elektroden-Membran-Rahmen-Baugruppe (2) und des Separators (30, 40), so dass das Dichtungs-Element (21) in Kontakt mit dem Rahmen-Element (20) gebracht wird, **dadurch gekennzeichnet, dass**
das Dichtungs-Element (21) oder/und ein Außenumfangs-Abschnitt (14b) der Gasdiffusions-Schicht (14) durch das/den andere/n in der Dickenrichtung der Polymer-Elektrolyt-Membran (11) so zusammengedrückt wird/werden, dass sie einander überlappen.

10. Verfahren zum Herstellen der Brennstoffzellen nach Anspruch 9, wobei, bevor die Elektroden-Membran-Rahmen-Baugruppe (2) und der Separator (30, 40) verbunden werden, das Dichtungs-Element (21) so ausgebildet wird, dass ein Abstand zwischen dem Dichtungs-Element (21) und dem Rahmen-Element (20) kürzer ist als ein Abstand zwischen dem Dichtungs-Element (21) und der Gasdiffusions-Schicht (14).

11. Verfahren zum Herstellen der Brennstoffzellen nach Anspruch 9 oder 10, wobei, bevor die Elektroden-Membran-Rahmen-Baugruppe (2) und der Separator (30, 40) verbunden werden, der Außenumfangs-Abschnitt (14b) der Gasdiffusions-Schicht (14) so geneigt wird, dass er einer Form des Dichtungs-Elementes (21) folgt.

12. Verfahren zum Herstellen der Brennstoffzelle nach einem der Ansprüche 9 bis 11, wobei das Dichtungs-Element (21) mittels Spritzgießen an einer Oberfläche des Separators (30, 40) positioniert wird.

13. Verfahren zum Herstellen der Brennstoffzelle nach einem der Ansprüche 9 bis 12, wobei die Gasdiffusions-Schicht (14) ein poröses Element umfasst, das hauptsächlich leitende Teilchen und einen Polymer-Kunststoff umfasst.

## Revendications

1. Pile à combustible comprenant :
une membrane électrolytique polymère (11) ;
une couche catalyseur (13) disposée sur la membrane électrolytique polymère (11) ;
un élément formant cadre (20) disposé sur une surface circonférentielle externe de la membrane électrolytique polymère (11) ;
une couche de diffusion de gaz (14) disposée sur la couche catalyseur (13) et l'élément formant cadre (20) de sorte qu'un bord externe (14a) de la couche de diffusion de gaz (14) est disposé sur le côté externe par rapport à un bord interne (20a) de l'élément formant cadre (20) tel qu'observé depuis un sens de l'épaisseur de la membrane électrolytique polymère (11) ;
un séparateur (30, 40) disposé sur la couche de diffusion de gaz (14) ; et
un élément d'étanchéité (21), constitué de résine, qui est porté en contact avec à la fois le séparateur (30, 40) et l'élément formant cadre (20),
**caractérisée en ce que**
au moins l'un de l'élément d'étanchéité (21) et d'une partie circonférentielle externe (14b) de la couche de diffusion de gaz (14) est écrasé par l'autre dans le sens de l'épaisseur de la membrane électrolytique polymère (11) afin de se chevaucher l'un l'autre.

2. Pile à combustible selon la revendication 1, une pression de contact entre l'élément d'étanchéité (21) et la partie circonférentielle externe (14b) de la couche de diffusion de gaz (14) est inférieure à une pression de contact entre l'élément d'étanchéité (21) et l'élément formant cadre (20).

3. Pile à combustible selon la revendication 1 ou 2, à la fois l'élément d'étanchéité (21) et la couche de diffusion de gaz (14) étant écrasés.

4. Pile à combustible selon l'une quelconque des revendications 1 à 3, l'élément d'étanchéité (21) étant placé sur une surface du séparateur (30, 40).

5. Pile à combustible selon la revendication 4, l'élément d'étanchéité (21) étant placé sur la surface du séparateur (30, 40) par moulage par injection.

6. Pile à combustible selon l'une quelconque des revendications 1 à 5, comprenant en outre un second élément d'étanchéité annulaire (60) constitué de résine, qui est disposé entre le séparateur (30, 40) et l'élément formant cadre (20), dans laquelle
le second élément d'étanchéité (60) est disposé avec une clairance (C1) par rapport au bord externe (14a) de la couche de diffusion de gaz (14), et
l'élément d'étanchéité est disposé afin de bloquer une partie de la clairance.

7. Pile à combustible selon la revendication 6, l'élément d'étanchéité (21) et le second élément d'étanchéité (60) étant intégralement formés du même matériau de résine.

8. Pile à combustible selon l'une quelconque des revendications 1 à 7, la couche de diffusion de gaz (14) comprenant un élément poreux contenant principalement des particules conductrices et une résine polymère.

9. Procédé de fabrication d'une pile à combustible, comprenant :
la préparation d'un ensemble électrode membrane cadre (2) comprenant une membrane électrolytique polymère (11), une couche catalyseur (13) disposée sur la membrane électrolytique polymère (11), un élément formant cadre (20) disposé sur une surface circonférentielle externe de la membrane électrolytique polymère (11), et une couche de diffusion de gaz (14) disposée sur la couche catalyseur (13) et l'élément formant cadre (20) de sorte qu'un bord externe (14a) de la couche de diffusion de gaz (14) est positionné sur le côté externe par rapport à un bord interne (20a) de l'élément formant cadre (20) tel qu'observé depuis un sens de l'épaisseur de la membrane électrolytique polymère (11),
la préparation d'un séparateur (30, 40) avec un élément d'étanchéité (21) disposé sur une surface du séparateur (30, 40) ; et
la combinaison de l'ensemble électrode membrane cadre (2) et du séparateur (30, 40) de sorte que l'élément d'étanchéité (21) est porté en contact avec l'élément formant cadre (20),
**caractérisé en ce que**
au moins l'un de l'élément d'étanchéité (21) et une partie circonférentielle externe (14b) de la couche de diffusion de gaz (14) est écrasé par l'autre dans le sens de l'épaisseur de la membrane électrolytique polymère (11) afin de se chevaucher l'un l'autre.

10. Procédé de fabrication de la pile à combustible selon la revendication 9, dans lequel avant la combinaison de l'ensemble électrode membrane cadre (2) et du séparateur (30, 40), l'élément d'étanchéité (21) est formé de sorte qu'une distance entre l'élément d'étanchéité (21) et l'élément formant cadre (20) soit plus courte qu'une distance entre l'élément d'étanchéité (21) et la couche de diffusion de gaz (14).

11. Procédé de fabrication de la pile à combustible selon la revendication 9 ou 10, dans lequel avant la combinaison de l'ensemble électrode membrane cadre (2) et du séparateur (30, 40), la partie circonférentielle externe (14b) de la couche de diffusion de gaz (14) est inclinée afin de suivre une forme de l'élément d'étanchéité (21).

12. Procédé de fabrication de la pile à combustible selon l'une quelconque des revendications 9 à 11, dans lequel l'élément d'étanchéité (21) est placé sur une surface du séparateur (30, 40) par moulage par injection.

13. Procédé de fabrication de la pile à combustible selon l'une quelconque des revendications 9 à 12, dans lequel la couche de diffusion de gaz (14) comprend un élément poreux contenant principalement des particules conductrices et une résine polymère.
